Europäisches Patentamt

European Patent Office

Office européen des brevets

(11) Numéro de publication: **0 198 735**
**A1**

## (12) DEMANDE DE BREVET EUROPEEN

(21) Numéro de dépôt: 86400514.5

(22) Date de dépôt: 11.03.86

(51) Int. Cl.4: **G02B 6/10 , H01L 31/02**

(30) Priorité: 15.03.85 FR 8503880

(43) Date de publication de la demande:
**22.10.86 Bulletin 86/43**

(84) Etats contractants désignés:
**CH DE GB IT LI NL**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Valette, Serge 41 rue des Eaux Claires F-38100 Grenoble(FR)**

(74) Mandataire: **Mongrédien, André et al c/o BREVATOME 25, rue de Ponthieu F-75008 Paris(FR)**

(54) Transducteur opto-électronique intégré et son procédé de fabrication.

(57) Ce transducteur comporte un guide de lumière - (12) réalisé sur un substrat (14), servant au transport d'au moins un signal lumineux provenant d'un dispositif optique, une zone détectrice (22) du signal lumineux, réalisée dans ledit substrat transformant le signal lumineux en un signal électrique, et un organe de couplage optique (26) servant à amener le signal lumineux se propageant, selon une première direction, dans le guide de lumière dans la zone détectrice (22), caractérisé en ce que l'organe de couplage (26) se compose d'une structure périodique (26), réalisée dans le guide de lumière comportant une alternance de zones (32, 34) d'indices de réfraction différents, orientées parallèlement les unes aux autres selon une seconde direction (D) formant un angle θ par rapport à la première direction de propagation du signal lumineux (24) dans le guide de lumière (12).

FIG. 2

# TRANSDUCTEUR OPTO-ELECTRONIQUE INTEGRE ET SON PROCEDE DE FABRICATION

La présente invention a pour objet un transducteur opto-électronique intégré et son procédé de fabrication. Elle trouve une application notamment dans le domaine des traitements de signaux radar en temps réel par exemple dans des corrélateurs, analyseurs de spectres ou interféromètres, dans le domaine des télécommunications par voie optique par exemple pour démultiplexage de signaux lumineux et dans le domaine des capteurs à fibre optique.

Un transducteur opto-électronique est un dispositif qui permet de détecter un ou plusieurs signaux lumineux provenant d'un dispositif optique notamment intégré tel qu'un interféromètre, un analyseur de spectre, ou un multiplexeur et à transformer ce ou ces signaux lumineux en un signal électrique correspondant.

Ces dispositifs optiques intégrés sur un substrat semiconducteur monocristallin notamment en silicium ou en composé III-V tel que GaAs sont d'un grand intérêt, d'une part à cause de la technologie disponible et d'autre part à cause d'un couplage possible avec les circuits électroniques de traitement correspondant ; ceci permet d'intégrer à la fois les composants optiques et les circuits électroniques de traitement sur un même substrat.

Actuellement, le problème du couplage entre les composants optiques et les composants électroniques se heurte à la façon d'effectuer le transfert des informations entre la partie optique et la partie électronique.

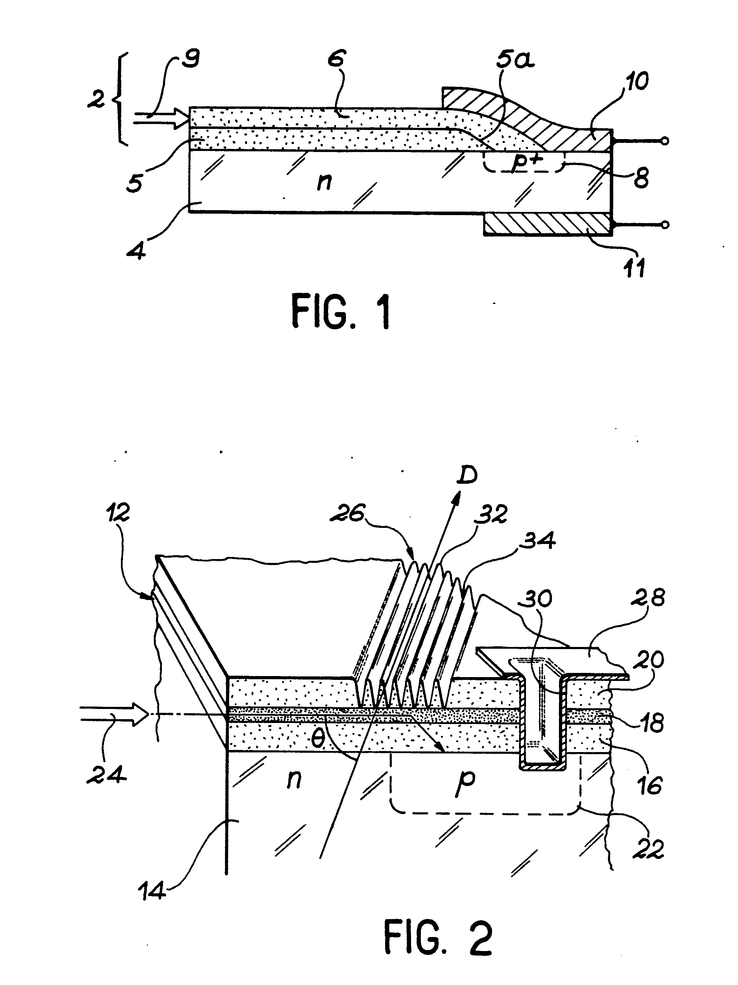

Sur la figure 1, on a représenté schématiquement, en coupe, un transducteur opto-électronique intégré selon l'art antérieur.

Ce transducteur est formé dans un guide de lumière 2 surmontant un substrat 4 par exemple en silicium monocristallin de type n. Ce guide de lumière 2 est formé d'une couche 5 d'oxyde de silicium d'environ 1μm et d'une couche de verre 6 d'environ 1μm constituant la couche guidante du guide de lumière 2. La couche guidante 6 présente un indice de réfraction d'environ 1,57 qui est supérieur à celui de la couche 5 d'oxyde. L'air, d'indice de réfraction inférieur à celui de la couche guidante 6, complète la structure du guide de lumière 2.

Ce transducteur opto-électronique comprend une zone de détection 8, formée par exemple par une jonction PN, servant à transformer un signal lumineux 9, provenant d'un dispositif optique quelconque, en un signal électrique correspondant. Des électrodes 10 et 11 disposées de part et d'autre du substrat 4 et en regard de la zone de détection permettant de récupérer le signal électrique formé dans la zone détectrice afin de le traiter dans un circuit électronique de traitement approprié.

Dans une telle structure, le signal lumineux à détecter est, dans la partie optique, isolé du substrat semiconducteur par la couche d'oxyde 5 épaisse, alors que dans la partie électronique de détection, le signal lumineux doit interagir avec le substrat semiconducteur. Le problème est donc de transférer le signal lumineux à détecter du guide de lumière au substrat.

L'une des techniques actuellement utilisée pour permettre ce transfert du signal lumineux est, comme représenté sur la figure 1, de diminuer l'épaisseur de la couche d'oxyde de silicium 5 se trouvant entre la couche guidante 6 du guide de lumière et le substrat 4 sur lequel celui-ci est réalisé, jusqu'à ce qu'elle s'annule en regard de la zone détectrice 8. Cette technique est notamment décrite dans un article de Appl. Phys. Lett. vol.22 n°9 du 1er mai 1973, p.463-464, de D.B. OSTROWSKY et al., intitulé "Integrated optical photodetector".

Afin d'obtenir un bon transfert du signal lumineux de la couche guidante 6 du guide de lumière à la zone détectrice intégrée au substrat, la pente 5a de la couche d'oxyde de silicium 5, intercalée entre la couche guidante 6 et le substrat 4, doit posséder un certain nombre de qualités.

Premièrement, cette pente doit être suffisamment douce afin d'éviter les problèmes de diffraction de la lumière entraînant la perte d'informations lumineuses et la formation de lumières parasites. Deuxièmement, cette pente doit être correctement positionnée par rapport à la zone détectrice, c'est-à-dire que la couche d'oxyde de silicium doit présenter une épaisseur nulle ou très faible (10 nm) en regard de la zone détectrice.

Troisièmement, la pente de la couche d'oxyde de silicium doit être réalisée de la façon la plus simple possible et suivant une technologie reproductible aisément. Enfin, cette technologie doit être compatible avec les techniques d'obtention des dispositifs optiques intégrés et de celles de la partie électronique de détection.

Ces différentes conditions sont malheureusement difficiles à satisfaire. En particulier, la couche d'oxyde de silicium est réalisée, dans le cas d'un substrat semiconducteur en silicium, par oxydation thermique du substrat à une température comprise entre 1 000 et 1200°C, à une pression d'une

atmosphère et pendant une durée de plusieurs heures. Cette oxydation à haute température et de longue durée entraîne généralement la destruction des profils de diffusion de la zone de détection.

La pente de cette couche d'oxyde peut être obtenue par attaque chimique de ladite couche en regard de la couche de détection ; cette attaque est notamment réalisée en utilisant une solution d'acide fluorhydrique.

Le positionnement précis de cette pente d'oxyde de silicium par rapport à la zone détectrice est difficile à réaliser, lorsque l'on désire transférer un seul signal lumineux de la couche guidante du guide de lumière dans la zone détectrice. Par ailleurs, le positionnement de plusieurs pentes est pratiquement impossible à réaliser, ceci est le cas lorsque l'on désire détecter plusieurs signaux lumineux, provenant de différents dispositifs optiques, dans des zones de détection différentes.

En plus de ce problème de positionnement, les différentes pentes d'oxyde de silicium à réaliser, généralement une pente par signal à détecter, sont techniquement difficiles à reproduire.

La présente invention a justement pour objet un transducteur opto-électronique intégré et son procédé de fabrication permettant de remédier aux différents inconvénients cités ci-dessus. En particulier, elle permet de détecter plusieurs signaux lumineux, provenant de différents dispositifs optiques intégrés ou non, dans une même zone de détection, réalisée dans un substrat sur lequel est formé le transducteur.

Le transducteur opto-électronique selon l'invention comprend un organe de couplage optique, servant à amener le ou les faisceaux à détecter se propageant dans le guide de lumière, dans la zone détectrice, réalisée dans le substrat sur lequel est formé le guide, qui peut être correctement positionné par rapport à la zone de détection et réalisable de façon simple et reproductible en utilisant une technologie compatible avec celle utilisée pour la réalisation des dispositifs optiques intégrés et des circuits intégrés, servant au traitement du signal électrique fourni par la zone de détection.

De façon plus précise, l'invention a pour objet un transducteur opto-électronique intégré comportant un guide de lumière, réalisé sur un substrat, servant au transport d'au moins un signal lumineux provenant d'un dispositif optique, une zone détectrice du signal lumineux, réalisée dans ledit substrat, transformant le signal lumineux en un signal électrique et un organe de couplage optique servant à amener le signal lumineux, se propageant selon une première direction dans le guide de lumière, dans la zone détectrice, se caractérisant en ce que l'organe de couplage se compose d'une structure périodique, réalisée dans le guide de lumière, comportant une alternance de zones d'indices de réfraction différents, orientées parallèlement les unes aux autres selon une seconde direction formant un angle $\theta$ par rapport à la première direction de propagation du signal lumineux dans le guide de lumière.

La structure périodique constituant l'organe de couplage optique permet d'accorder les vitesses des modes vibratoires du signal lumineux à détecter dans le guide de lumière avec celles des modes vibratoires de ce même signal lumineux à l'intérieur du substrat.

De façon avantageuse, cette structure périodique est constituée d'un réseau de diffraction se composant par exemple, de sillons parallèles régulièrement espacés, gravés dans le guide de lumière.

De façon avantageuse, le guide de lumière est formé d'une couche de nitrure de silicium intercalée entre deux couches d'oxyde de silicium. Le nitrure de silicium est un matériau présentant un indice de réfraction voisin de 2 et l'oxyde de silicium un matériau présentant un indice de réfraction voisin de 1,45, pour une longueur d'onde de 0,8 $\mu$m ; un tel guide de lumière est donc un guide à forte différence d'indice de réfraction.

Pour éviter que le phénomène de diffraction, engendré par la structure périodique telle qu'un réseau, provoque une diffraction dans une autre région que celle désirée, entraînant ainsi une perte de rendement, l'angle $\theta$ doit être choisi convenablement afin que les faisceaux diffractés par le réseau correspondent à des modes de propagation dont les indices effectifs sont dans tous les cas supérieurs à 1. On rappelle que l'indice effectif est défini par le produit de l'indice de réfraction et du sinus de l'angle de réfraction.

Pour un guide de lumière formé d'une couche de nitrure de silicium intercalée entre deux couches d'oxyde, l'angle $\theta$ est compris entre 30 et 47°.

Selon un mode préféré de réalisation du dispositif de l'invention, celui-ci comprend au moins un microguide d'entrée servant au guidage du signal lumineux vers l'organe optique.

La présente invention a aussi pour objet un procédé de fabrication d'un transducteur opto-électronique intégré, servant à détecter un ou plusieurs signaux lumineux provenant d'un dispositif optique intégré ou non.

Selon l'invention, ce procédé comprend les étapes suivantes :

-réalisation dans un substrat d'une zone détectrice servant à transformer le signal lumineux en un signal électrique,

-réalisation sur le substrat d'un guide de lumière par recouvrement successif du substrat d'une première couche de matériau, d'une seconde couche de matériau, et éventuellement d'une troisième couche de matériau, la seconde couche de matériau d'indice de réfraction supérieur à celui des première et troisième couches constituant la couche guidante du guide,

-réalisation dans l'une au moins des couches du guide de lumière, et au moins partiellement au-dessus de la zone détectrice, d'une structure périodique comportant une alternance de zones d'indices de réfraction différents, orientées parallèlement les unes aux autres selon une direction formant un angle $\theta$ par rapport à la direction de propagation du signal lumineux,

-réalisation, en regard de la zone détectrice et en dehors de la structure périodique d'une ouverture dans le guide de lumière afin de mettre à nu une partie de la zone détectrice, et

-réalisation en un matériau conducteur d'un contact électrique dans ladite ouverture et d'une ligne d'interconnexion.

La troisième couche peut en fait être l'air surmontant la structure du transducteur.

Les différentes étapes de ce procédé, prises isolément, sont bien connues de l'homme du métier ; elles sont simples à mettre en oeuvre et reproductibles.

Par ailleurs, dans ce procédé, la prise de contact électrique sur la zone de détection ainsi que la ligne d'interconnexion, servant notamment à connecter cette zone de détection au circuit électronique de traitement, sont réalisées en fin de procédé, ce qui évite toute destruction de ce contact et de cette ligne, lors des différentes étapes de gravures nécessaires à la fabrication du transducteur opto-électronique intégré conformément à l'invention.

Selon un mode préféré de mise en oeuvre du procédé de l'invention, le substrat est réalisé en silicium monocristallin. Dans une telle mise en oeuvre, on forme avantageusement la première couche de matériau par oxydation thermique du substrat en silicium à une température comprise entre 800 et 850°C et à une pression comprise entre $5.10^5$ et $3.10^6$ Pa.

Ce procédé dedépôt à basse température permet d'éviter toutes détériorations de la zone de détection.

De façon avantageuse, le signal lumineux à détecter ayant une longueur d'onde $\lambda$o dans le vide et la structure périodique étant représentée par un vecteur $\vec{K}$, où le module de $\vec{K}$ est égal à $2\pi/p$, p étant le pas de la structure périodique, on réalise la structure périodique de façon qu'il existe au moins un entier m pour lequel l'extrémité du vecteur $\overrightarrow{mK}$ correspondant se trouve dans une zone, déterminée en traçant trois cercles concentriques, un cercle interne de rayon $2\pi/\lambda$o, un cercle médian de rayon $2\pi n_s/\lambda$o, où $n_s$ représente l'indice de réfraction du substrat, et un cercle externe de rayon $2\pi n_e/\lambda$o, où $n_e$ représente l'indice effectif du guide de lumière puis en traçant, à partir d'un point appartenant au cercle externe, une tangente au cercle interne et une tangente au cercle médian, l'aire délimitée par les deux tangentes et le cercle médian définissant ladite zone. Par ailleurs, le vecteur $\vec{K}$ doit être choisi de façon qu'il n'existe pas de vecteur nK, n étant un entier différent de m, qui correspondrait à des faisceaux diffractés dont la constante de propagation serait égale à celle d'un des modes du guide ; c'est-à-dire que l'extrémité du vecteur $\overrightarrow{nK}$ ne doit pas se trouver sur le cercle externe.

Ces conditions du vecteur $\vec{K}$ contribuent à éviter les diffractions dans les régions autres que celles de la zone de détection.

Selon une mise en oeuvre préférée du procédé de l'invention, on réalise la structure périodique en gravant au moins une partie du guide de lumière afin de former des sillons parallèles, régulièrement espacés.

Selon un autre mode préféré de mise en oeuvre de l'invention, on réalise une gravure dans la première couche de matériau afin de former au moins un microguide d'entrée pour le guidage du signal lumineux vers la structure périodique.

D'autres caractéristiques et avantages de l'invention ressortiront mieux de la description qui va suivre, donnée à titre illustratif et non limitatif.

La description est faite en référence aux figures annexées, sur lesquelles :

-la figure 1, déjà décrite, représente schématiquement, en coupe longitudinale, un transducteur opto-électronique intégré selon l'art antérieur,

-la figure 2 représente, en perspective, le principe du transducteur opto-électronique conformément à l'invention,

-la figure 3 représente schématiquement, en perspective, un mode de réalisation d'un transducteur opto-électronique selon l'invention, et

-la figure 4 est un diagramme illustrant l'accord des vitesses des modes vibratoires des signaux lumineux à détecter dans le guide de lumière avec celles de ces signaux dans le substrat.

En se référant à la figure 2, le transducteur opto-électronique intégré selon l'invention comporte un guide de lumière 12 réalisé sur un substrat 14, notamment un semiconducteur monocristallin. Comme matériau semiconducteur, on peut utiliser par exemple du silicium ou un matériau III-V tel que le GaAs.

Le guide de lumière 12 peut être constitué de trois couches superposées respectivement 16, 18 et 20. La couche 18, intercalée entre les couches 16 et 20, constitue la couche guidante du guide de lumière 12. Elle présente un indice de réfraction supérieur à celui des couches 16 et 20. La différence d'indice entre la couche guidante 18 et les deux autres couches 16 et 20 est au moins égale à $10^{-3}$ pour des couches de 2 à 10 $\mu m$.

Par exemple, la couche inférieure 16 surmontant le substrat 14 est réalisée en oxyde de silicium, la couche guidante 18 en nitrure de silicium et la couche supérieure 20 en oxyde de silicium ; l'indice de réfraction de la couche 18 est égale à 2 et l'indice de réfraction des couches 16 et 20 à environ 1,45 pour une longueur d'onde de 0,8 $\mu m$.

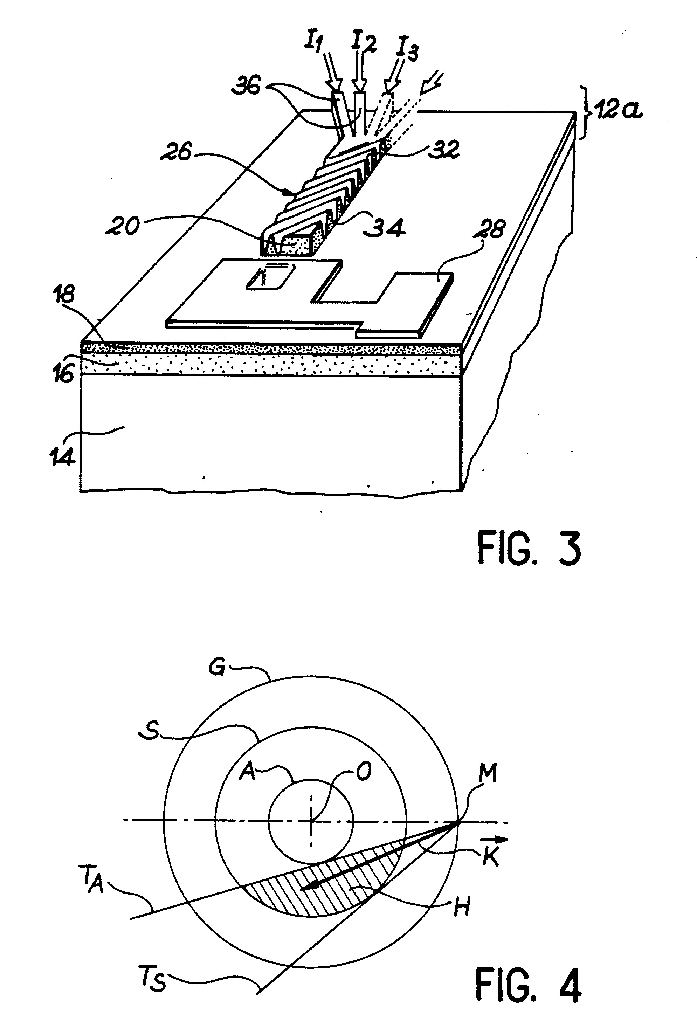

Le transducteur opto-électronique de l'invention comprend une zone de détection 22 définie dans le substrat semiconducteur 14. Celle-ci permet de détecter un signal lumineux 24, provenant d'un dispositif optique intégré ou non (interféromètre, multiplexeur, analyseur de spectre). Cette zone de détection est par exemple, comme représenté sur les figures 2 et 3, une jonction PN. Elle pourrait aussi être constituée par une diode Schottky ou une diode à avalanche dont les réalisations sont bien connues de l'homme du métier.

Une structure périodique 26, réalisée dans l'une au moins des couches du guide de lumière 12, par exemple la couche supérieure 20, permet d'amener le signal lumineux 24 à détecter, se propageant dans la couche guidante 18 du guide de lumière, dans la zone de détection 22.

L'absorption du signal lumineux 24 par la zone de détection 22 entraîne dans celle-ci la formation de paires électrons-trous et donc la formation d'un courant électrique qui peut être récolté à l'aide d'une ligne conductrice 28, réalisée à la surface du guide de lumière. La prise de contact électrique de la ligne conductrice 28 sur la zone de détection 22 est réalisée grâce à une ouverture 30 pratiquée dans les différentes couches du guide de lumière 12, sur toute leur hauteur, les bords de l'ouverture 30 étant recouverts du matériau conducteur constituant la ligne 28. Cette prise de contact est réalisée en aval de la structure périodique 26.

Cette structure périodique 26, servant à amener le signal lumineux 24 à détecter dans la zone de détection 22, est constituée notamment par un réseau de diffraction comportant une alternance de zones d'indices de réfraction différents. Dans le cas représenté sur les figures 2 et 3, ces zones d'indices de réfraction différents sont formées d'une alternance de bosses 32 et de creux 34, l'indice de réfraction des bosses 32 étant par exemple celui de la couche supérieure 20 du guide dans laquelle elles sont réalisées et l'indice de réfraction des creux 34 étant celui de l'air.

Ces zones 32 et 34 d'indices de réfraction différents présentent la forme de bandes orientées parallèlement entre elles selon une direction D (figure 2). Cette direction D forme un angle $\theta$ par rapport à la direction de propagation du signal lumineux 24 à détecter. Dans le cas d'un guide de lumière 12 comportant une couche 18 en nitrure de silicium intercalée entre deux couches 16 et 20 en oxyde de silicium, cet angle $\theta$ peut être compris entre 30 et 47° pour une couche de nitrure de silicium de 0,16 $\mu m$ et un signal lumineux 24 de 0,8 $\mu m$ en longueur d'onde ; cet angle $\theta$ est par exemple pris voisin de 40°.

La structure périodique 26 de type réseau permet de transférer le signal lumineux 24 à détecter de la couche guidante 18 dans la zone de détection 22 réalisée dans le substrat 14 par diffraction de ce faisceau lumineux.

Le transducteur opto-électronique selon l'invention peut, comme représenté sur la figure 3, être avantageusement utilisé pour détecter plusieurs signaux lumineux $I_1$, $I_2$, $I_3$... dans la même zone de détection 22. Dans ce cas, afin de faciliter le guidage des différents signaux lumineux sur la structure périodique 26, le transducteur opto-électronique peut être équipé de plusieurs microguides d'entrée tels que 36 au lieu d'un guide de lumière unique 12 (figure 2).

Ces microguides d'entrée 36 sont par exemple définis par gravure de la couche supérieure 20 notamment en oxyde de silicium, le guide "principal" 12a n'étant alors formé que de deux couches 16 et 18 par exemple en oxyde de silicium et en nitrure de silicium, l'air complétant la structure de ce guide principal 12a.

Dans une telle structure, la couche supérieure 20 est uniquement présente aux emplacements des microguides 36 et de la structure périodique 26. (figure 3). En conséquence, la ligne conductrice 28 servant à collecter le courant produit dans la zone de détection 22 est réalisée sur la couche guidante 18 et non sur la couche supérieure 20.

Il est à noter que l'emploi de microguides est particulièrement intéressant pour la détection de plusieurs signaux lumineux. Cependant, il est aussi possible de réaliser un transducteur n'ayant qu'un seul microguide pour détecter un seul signal lumineux.

La structure périodique ou réseau de diffraction 26 permet de diffracter les signaux lumineux à détecter $I_1$, $I_2$, $I_3$... uniquement en direction de la zone de détection 22. Cette diffraction unidirectionnelle est possible avec un guide de lumière 12 à forte variation d'indice permettant d'accorder les vitesses des modes vibratoires des signaux lumineux dans le guide de lumière 12 et celles des modes vibratoires de ces mêmes signaux dans le substrat 14, où est réalisée la zone de détection 22.

Cet accord des vitesses, dans le cas d'un transducteur opto-électronique dont la structure est celle représentée sur la figure 3, est illustré sur la figure 4.

Sur cette figure 4, sont représentés trois cercles centrés en un même point O de rayons différents Le cercle interne A représente le lieu des extrémités du vecteur d'onde $\vec{k_a}$ de l'air, le cercle médian S représente le lieu des extrémités du vecteur d'onde $\vec{k_s}$ du substrat 14 et le cercle externe G représente le lieu des extrémités du vecteur d'onde $\vec{k_g}$ de la couche guidante 18 du guide de lumière ; les rayons des trois cercles sont donc égaux respectivement aux modules des vecteurs $\vec{k_a}$, $\vec{k_s}$, $\vec{k_g}$.

Si $\lambda_o$ représente la longueur d'onde dans le vide du signal lumineux à détecter, $n_s$ l'indice de réfraction du substrat 14 et $n_e$ l'indice effectif du guide de lumière, les rayons des cercles A, S et G sont égaux respectivement à $2\pi/\lambda_o$, $2\pi n_s /\lambda_o$ et $2\pi n_e/\lambda_o$. On rappelle que l'indice effectif du guide est fonction des indices de réfraction des couches le constituant ainsi que de leur épaisseur.

Sur la figure 4, on a tracé, à partir d'un point M situé sur le cercle externe G deux droites $T_A$ et $T_S$ tangentes respectivement au cercle interne A et au cercle médian S. Ces deux droites $T_A$ et $T_S$ délimitent avec le cercle S une zone H, hachurée. Cette zone H représente, pour le vecteur $\vec{K}$ représentatif de la structure périodique ou du réseau 26, la zone dans laquelle doit se trouver l'extrémité d'au moins un vecteur $\overrightarrow{mK}$ de

ladite structure afin que la diffraction du faisceau lumineux à détecter n'ait lieu que vers le substrat et la zone détectrice réalisée dans celui-ci, et non pas dans l'air. Par ailleurs, l'extrémité d'au moins un vecteur $\overrightarrow{nK}$ ne doit pas se trouver sur le cercle externe G, ce qui entraînerait la diffraction vers la couche guidante. Le module du vecteur $\vec{K}$ du réseau est relié au pas p ou période de celui-ci par l'expression $|\vec{K}| = 2\pi/p$. De plus, m et n représentent des ordres différents du réseau ; ce sont des entiers positifs, négatifs ou nuls.

On va maintenant décrire un procédé de fabrication du transducteur opto-électronique intégré tel que décrit précédemment, dans le cas d'un substrat en silicium monocristallin de type n.

La première étape du procédé consiste à réaliser la zone de détection 22, comme représenté sur la figure 2, dans le substrat 14 en silicium monocristallin. Cette zone détectrice 22 est par exemple une jonction PN obtenue par diffusion ou implantation d'ions locale dans le substrat 14. Comme matériau dopant, on peut utiliser le bore pour un substrat de type n.

Afin de réarranger le réseau cristallin du substrat 14, perturbé lors de la diffusion ou de l'implantation d'ions, on effectue un recuit du substrat, par exemple un recuit au four à une température comprise entre 800 et 1100°C.

Les étapes suivantes consistent à réaliser sur le substrat 14 le guide de lumière 12. La couche inférieure du guide de lumière 12 est réalisée avantageusement en oxyde de silicium par oxydation thermique du substrat à basse température. Cette croissance peut être obtenue entre 800 et 850°C sous une pression comprise entre $5.10^5$ et $3.10^6$ Pa, et par exemple égale à $2.10^6$ Pa. Cette couche d'oxyde de silicium 16 présente une épaisseur d'environ 2 $\mu$m et un indice de réfraction d'environ 1,45 pour une longueur d'onde de 0,8 $\mu$m.

On recouvre ensuite la couche d'oxyde de silicium 16 d'une couche par exemple de nitrure de silicium 18 ayant une épaisseur d'environ 0,16 $\mu$m. Cette couche est par exemple obtenue par un procédé de dépôt chimique en phase vapeur basse pression (LPCVD). La température de dépôt est de l'ordre de 800°C. Cette couche de nitrure de silicium 18 présente un indice de réfraction égal à 2.

On recouvre alors la couche de nitrure de silicium 18 d'une couche d'oxyde de silicium 20, obtenue par exemple par un procédé de dépôt chimique en phase vapeur à basse température (LPO) ; la température de dépôt est voisine de 450°C. Cette couche d'oxyde de silicium 20 présente une épaisseur d'environ 1 μm et un indice de réfraction de l'ordre de 1,45 pour une longueur d'onde de 0,8 μm.

Après obtention du guide de lumière, on réalise la structure périodique ou réseau 26. Cette structure 26 peut être obtenue, comme représenté sur la figure 3, en gravant localement, à travers un masque de résine approprié obtenu selon les procédés classiques de photolithographie, une partie du guide de lumière 12, par exemple la couche supérieure 20 de ce guide. Cette gravure peut être réalisée de façon anisotrope par un procédé de gravure ionique réactive (GIR) utilisant comme agent d'attaque du tétrafluorure de carbone ou du trifluorométhane pour une couche 20 en oxyde de silicium.

Lorsque le transducteur opto-électronique est muni de plusieurs microguides d'entrée 36, comme représenté sur la figure 3, la gravure de la couche supérieure 20 du guide de lumière, pour former le réseau 26, peut être mise à profit pour former ces microguides. La gravure de la couche supérieure 20 est alors réalisée de façon à ne garder de cette couche que la région du réseau de diffraction 26 et celles des microguides 36.

L'étape suivante du procédé consiste à réaliser, en regard de la zone détectrice 22 et en aval de la structure périodique 26, une ouverture 30 dans le guide de lumière jusqu'à mise à nu de la zone de détection 22, comme représenté sur la figure 2. Cette ouverture 30 peut être réalisée en gravant, par un procédé de gravure ionique réactive, les couches 18 et 20 constituant le guide principal de lumière 12a en utilisant notamment comme agent d'attaque de l'hexafluorure de soufre pour les trois couches.

On réalise ensuite le contact électrique de la zone de détection 22 ainsi que la ligne conductrice 28, servant à relier ladite zone de détection au circuit électronique de traitement en déposant une couche conductrice notamment en aluminium par pulvérisation cathodique, puis en gravant celle-ci, à travers un masque de résine obtenu selon les procédés classiques de photolithographie, afin de ne garder du matériau conducteur que dans les zones du contact électrique et de la ligne conductrice. Cette couche présente par exemple une épaisseur comprise entre 0,1 et 1 μm.

Le procédé de fabrication conformément à l'invention d'un transducteur opto-électronique intégré présente une mise en oeuvre simple et reproductible, compatible avec les technologies généralement utilisées pour la fabrication des dispositifs optiques intégrés et des circuits électroniques de traitement associés. Le positionnement correct de la structure périodique par rapport à la zone de détection ne pose aucun problème.

Ce procédé permet de fabriquer un transducteur opto-électronqiue utilisable pour la détection de plusieurs signaux lumineux provenant de différents dispositifs optiques par une même zone de détection, contrairement à l'art antérieur.

La description donnée précédemment n'a bien entendu été donnée qu'à titre explicatif et non limitatif, toutes modifications dans la réalisation du transducteur opto-électronique de l'invention pouvant être envisagées sans pour autant sortir du cadre de l'invention.

En particulier, la nature du substrat et des différentes couches constituant le guide de lumière peuvent être modifiées à condition toutefois que la couche guidante présente un indice de réfraction supérieur à celui des deux couches adjacentes.

Il est en effet possible de réaliser un guide de lumière à partir d'un substrat en phosphore d'indium ; les différentes couches de ce guide sont alors réalisées en un matériau quaternaire du type $Ga_{1-x}In_yAs_{1-y}P_x$, x et y étant compris entre 0 et 1, l'indice de réfraction des différentes couches du guide étant modifiable suivant la composition de celles-ci. Il est de même possible de réaliser un guide de lumière à partir d'un substrat en arséniure de gallium, les différentes couches étant alors en un matériau ternaire du type $Ga_{1-z}Al_zAs$, z étant compris entre 0 et 1. On peut aussi utiliser un substrat en verre.

Par ailleurs, le réseau de diffraction peut être obtenu en gravant une, deux ou trois couches du guide de lumière sur tout ou partie de leur épaisseur, la hauteur des sillons 34 du réseau de diffraction définit sa force ; plus la hauteur des sillons est importante plus la force du réseau l'est.

En outre, les différentes gravures pour former le réseau, les microguides et le trou de contact peuvent aussi être réalisées par attaque chimique.

Par ailleurs, la structure périodique peut aussi être définie en implantant localement, à travers un masque approprié, des ions de façon modifier localement l'indice de réfraction de l'une des couches formant le guide de lumière. Une solution consiste à implanter des ions de bore, d'hélium, d'oxygène à des doses comprises entre $10^{14}$ et $10^{16}$ atomes/cm² et des énergies de 50 à 500keV dans la couche guidante en nitrure de silicium. Dans ce cas, en l'absence de microguide, la structure du transducteur opto-électronique peut alors être définie dans un guide de lumière dont la couche supérieure est en fait l'air surmontant la structure.

## Revendications

1. Transducteur opto-électronique intégré comportant un guide de lumière (12, 12a) réalisé sur un substrat (14), servant au transport d'au moins un signal lumineux (24, I₁, I₂, ...) provenant d'un dispositif optique, une zone détectrice (22) du signal lumineux, réalisée dans ledit substrat (14), transformant ce signal lumineux en un signal électrique, et un organe de couplage optique (26) servant à amener le signal lumineux (24, I₁, I₂, ...), se propageant selon une première direction dans le guide de lumière (12, 12a), dans la zone détectrice (22), caractérisé en ce que l'organe de couplage (26) se compose d'une structure périodique (26), réalisée dans le guide de lumière (12, 12a) comportant une alternance de zones (32, 34) d'indices de réfraction différents, orientées parallèlement les unes aux autres selon une seconde direction (D) formant un angle θ par rapport à la première direction de propagation du signal lumineux (24) dans le guide de lumière (12).

2. Transducteur opto-électronique selon la revendication 1, caractérisé en ce que la structure périodique (26) est un réseau de diffraction.

3. Transducteur opto-électronique selon la revendication 1 ou 2, caractérisé en ce que la structure périodique (26) se compose de sillons (34) parallèles, régulièrement espacés, gravés dans le guide de lumière (12).

4. Transducteur opto-électronique selon l'une quelconque des revendications 1 à 3, caractérisé en ce que le guide de lumière (12) est formé d'une couche de nitrure de silicium (18) intercalée entre deux couches d'oxyde de silicium (16, 20).

5. Transducteur opto-électronique selon l'une quelconque des revendications 1 à 4, caractérisé en ce que le substrat (14) est réalisé en silicium monocristallin.

6. Transducteur opto-électronique selon la revendication 4, caractérisé en ce que l'angle θ est compris entre 30 et 47°.

7. Transducteur opto-électronique selon l'une quelconque des revendications 1 à 7, caractérisé en ce que la zone détectrice (22) est une jonction PN ou une diode avalanche.

8. Transducteur opto-électronique selon l'une quelconque des revendications 1 à 7, caractérisé en ce qu'il comprend au moins un microguide d'entrée - (36) servant au guidage du signal lumineux (24, I₁, I₂ ..) vers l'organe de couplage optique (26).

9. Procédé de fabrication d'un transducteur opto-électronique intégré servant à détecter au moins un signal lumineux (24, I₁, I₂,...) provenant d'un dispositif optique, se propageant dans une première direction, caractérisé en ce qu'il comprend les étapes suivantes :

- réalisation dans un substrat (14) d'une zone détectrice (22) servant à transformer le signal lumineux (24) en un signal électrique,

- réalisation sur le substrat (14) d'un guide de lumière (12) par recouvrement successif du substrat (14) d'une première couche de matériau (16), d'une seconde couche de matériau (18), et éventuellement d'une troisième couche de matériau (20), la seconde couche de matériau (18) d'indice de réfraction supérieur à celui des première et troisième couches (16, 20) constituant la couche guidante du guide,

- réalisation dans l'une au moins des couches du guide de lumière (12), et au moins partiellement au-dessus de la zone détectrice (22), d'une structure périodique (26) comportant une alternance de zones (32, 34) d'indices de réfraction différents, orientées parallèlement les unes aux autres selon une direction (D) formant un angle θ par rapport à la première direction de propagation du signal lumineux (24),

- réalisation en regard de la zone détectrice (22) d'une ouverture (30) dans le guide de lumière (12) afin de mettre à nu une partie de la zone détectrice (22), et

- réalisation en un matériau conducteur, d'un contact électrique dans ladite ouverture (30) et d'une ligne d'interconnexion (28).

10. Procédé de fabrication selon la revendication 9, caractérisé en ce que l'on réalise la structure périodique (26) en gravant au moins une partie du guide de lumière (12) afin de former des sillons - (34) parallèles, régulièrement espacés.

11. Procédé de fabrication selon la revendication 9 ou 10, caractérisé en ce que, le signal lumineux - (24) à détecter ayant une longueur d'onde $\lambda_0$ dans le vide et la structure périodique (26) étant représentée par un vecteur $\overrightarrow{K}$, où le module de $\overrightarrow{K}$ est égal à $2\pi/p$, p étant le pas de la structure périodique, on réalise la structure périodique - (26) de façon qu'il existe un entier m pour lequel l'extrémité du vecteur $\overrightarrow{mK}$ correspondant se trouve dans une zone (H), déterminée en traçant trois cercles concentriques, un cercle interne (A) de rayon $2\pi/\lambda_0$, un cercle médian (S) de rayon $2\pi n_s/\lambda_0$ où $n_s$ représente l'indice de réfraction du substrat (14), et un cercle externe (G) de rayon $2\pi n_e/\lambda_0$, où $n_e$ représente l'indice effectif du guide de lumière, puis en traçant à partir d'un point (M) appartenant au cercle externe (G), une tangente -

($T_A$) au cercle interne (A) et une tangente ($T_S$) au cercle médian, l'aire délimitée par les deux tangentes et le cercle médian définissant ladite zone (H), et de façon qu'il n'existe pas d'entier n, différent de m, pour lequel l'extrémité du vecteur $\overrightarrow{nK}$ correspondant ne se trouve pas sur le cercle externe (G).

12. Procédé de fabrication selon l'une quelconque des revendications 9 à 11, caractérisé en ce que la première et la troisième couches de matériau (16, 20) sont réalisées en oxyde de silicium et la seconde couche de matériau (18) en nitrure de silicium.

13. Procédé de fabrication selon l'une quelconque des revendications 9 à 12, caractérisé en ce que le substrat (14) est réalisé en silicium monocristallin ou en arséniure de gallium.

14. Procédé de fabrication selon l'une quelconque des revendications 9 à 13, caractérisé en ce que l'on réalise une gravure de la première couche de matériau (20) afin de former au moins un microguide d'entrée (36) pour le guidage du signal lumineux (24) vers la structure périodique (26).

15. Procédé de fabrication selon la revendication 13, caractérisé en ce que l'on forme la première couche de matériau (16) par oxydation thermique du substrat en silicium à une température comprise entre 800 et 850°C et à une pression comprise entre $5.10^5$ et $3.10^6$ Pa.

16. Procédé de fabrication selon l'une quelconque des revendications 9 à 15, caractérisé en ce que l'on réalise la zone de détection (22) par diffusion ou implantation d'ions locale dans le substrat (14).

FIG. 1

FIG. 2

0 198 735

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | APPLIED PHYSICS LETTERS, vol. 22, no. 19, 1er mai 1973, pages 463-464, American Institute of Physics, New York, US; D.B. OSTROWSKY et al.: "Integrated optical photodetector" * En entier * | 1-3,6 | G 02 B 6/10 H 01 L 31/02 |
| A,D | IDEM | 7,9,13 ,15,16 | |
| | --- | | |
| A | EP-A-0 106 752 (COMP. LYONNAISE DE TRANSMISSIONS OPTIQUES) * Page 7, lignes 1-28; figures 4-6 * | 1-3,5, 7,9,10 ,13 | |
| | --- | | DOMAINES TECHNIQUES RECHERCHES (Int. Cl.4) |
| A | DE-A-2 624 436 (LICENTIA PATENT-VERWALTUNGS GmbH) * Page 11, ligne 13 - page 12, ligne 25; figure 1 * | 1,9 | |
| | | | G 02 B H 01 L |
| | --- | | |
| A | OPTICS COMMUNICATIONS, vol. 20, no. 2, février 1977, pages 246-249, Amsterdam, NL; J.C. PEUZIN et al.: "Single beam grating coupler with a large grating periodicity" * Chapitres 1-3; figures * | 11 | |
| | --- | | |
| A | US-A-3 674 335 (A. ASHICIN et al.) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 02-07-1986 | MORRELL D.M. |

Office européen
des brevets

**RAPPORT DE RECHERCHE EUROPEENNE**

Numéro de la demande

EP 86 40 0514

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | 6TH EUROPEAN MICRO.WAVE CONFERENCE, 14-17 septembre 1976, Rome, pages 367-376, Microwave Exhibitions & Publishers Ltd, Sevenoaks, Kent, GB; R. ULRICH: "Optics of guided waves" | | |

- - - - -

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 02-07-1986 | MORRELL D.M. |